(19) **Europäisches Patentamt**
**European Patent Office**
**Office européen des brevets**

(11) **EP 1 616 327 B1**

(12) **EUROPEAN PATENT SPECIFICATION**

(45) Date of publication and mention
of the grant of the patent:
**09.04.2008 Bulletin 2008/15**

(51) Int Cl.:
$G11B\ 7/135^{(2006.01)}$    $G02B\ 13/18^{(2006.01)}$
$G02B\ 5/18^{(2006.01)}$

(21) Application number: **04728407.0**

(22) Date of filing: **20.04.2004**

(86) International application number:
**PCT/JP2004/005634**

(87) International publication number:
**WO 2004/095443 (04.11.2004 Gazette 2004/45)**

(54) **OPTICAL PICKUP APPARATUS AND OPTICAL SYSTEM FOR OPTICAL PICKUP APPARATUS**

OPTISCHER ABTASTKOPF, UND OPTISCHES SYSTEM MIT EINEM SOLCHEN KOPF

APPAREIL DE LECTURE OPTIQUE ET SYSTEME OPTIQUE POUR CET APPAREIL

(84) Designated Contracting States:
**AT BE BG CH CY CZ DE DK EE ES FI FR GB GR HU IE IT LI LU MC NL PL PT RO SE SI SK TR**

(30) Priority: **22.04.2003 JP 2003117027**

(43) Date of publication of application:
**18.01.2006 Bulletin 2006/03**

(73) Proprietor: **Konica Minolta Opto, Inc.**
**Hachioji-shi,**
**Tokyo 192-8505 (JP)**

(72) Inventors:
• **MORI, Nobuyoshi,**
**c/o Konica Minolta Opto, Inc.**
**Hachioji-shi,**
**Tokyo 192-8505 (JP)**

• **KIMURA, Tohru,**
**c/o Konica Minolta Opto, Inc.**
**Hachioji-shi,**
**Tokyo 192-8505 (JP)**

(74) Representative: **Roberts, Mark Peter**
**J.A. Kemp & Co.**
**14 South Square**
**Gray's Inn**
**London WC1R 5JJ (GB)**

(56) References cited:
**EP-A- 1 100 078**     **EP-A- 1 102 251**
**EP-A- 1 215 666**     **EP-A- 1 296 317**
**US-A- 5 648 951**     **US-A- 6 084 843**

• **PATENT ABSTRACTS OF JAPAN vol. 2003, no. 07, 3 July 2003 (2003-07-03) -& JP 2003 091859 A (LG ELECTRONICS INC), 28 March 2003 (2003-03-28)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

**Description**

The present invention relates to an optical pickup apparatus and, more particularly, to an optical pickup apparatus which can record and/or reproduce information on/from an optical information recording medium by using the light beams emitted from light sources having different light source wavelengths and an objective lens used for the apparatus.

Recently, research and development have quickly progressed toward a high-density optical disc system which can record/reproduce information by using a blue-violet semiconductor laser having a wavelength of about 400 nm. An optical disc which records/reproduces information under the specifications of an NA of 0.85 and a light source wavelength of 405 nm (in this specification, such an optical disc will be referred to as a "high-density DVD" hereinafter) can record 20 to 30 GB of information per surface with the same diameter as that of a DVD (NA: 0.6, light source wavelength: 650 nm, storage capacity: 4.7 GB), which is 12 cm.

The ability of properly recording/reproducing information on/from such a high-density DVD alone is not enough in terms of the value of an optical pickup apparatus as a product. In consideration of the current situation in which DVDs and CDs on which various kinds of information are recorded are on the market, in addition to the ability of properly recording/reproducing information on/from a high-density DVD, providing a compatible type optical pickup apparatus with the ability of properly recording/reproducing information on/from a conventional DVD or CD which the user owns will increase the value of the apparatus as a product. Under such circumstances, it is required for a focusing optical system used for a compatible type optical pickup apparatus to ensure a predetermined spot light amount for proper recording/reproduction of information on/from any one of high-density DVDs, conventional DVDs. and CDs as well as having a low-cost, simple arrangement. For example, Japanese Unexamined Patent Publication No. 2003-91859 corresponding to EP-A-1,296,317 discloses such a compatible type optical pickup apparatus realized by using a hologram optical element.

When information is to be recorded and/or reproduced on/from CDs, DVDs, and high-density DVDs by using the same focusing optical system, for example, the different thicknesses of the protective layers cause spherical aberration and different numerical apertures (NAs) make it necessary to provide a stop. In order to solve such problems, a different order diffraction technique has been developed. According to this technique, light focusing operation is performed by using diffracted light of an order where the highest diffraction efficiency is obtained when light beams from semiconductor lasers having different light source wavelengths are made to pass through the diffraction structure provided on an objective lens. This makes it possible to correct spherical aberration due to the differences in thickness between protective layers or to provide the function of a stop by forming a light beam in a region exceeding a predetermined numerical aperture into flare.

According to the different order diffraction technique, however, a diffraction effect (convergence angle) appears when (diffraction order x wavelength) of a given light beam becomes equal to that of another light beam. Assume that a light beam used for a CD has a wavelength near 800 nm, and a light beam used for a high-density DVD has a wavelength near 400 nm. In this case, therefore, in order to differentiate (to change the convergence angle) a light beam used for the high-density DVD which passes through the diffraction structure of the objective lens from a light beam used for the CD, a restriction must be imposed such that any even-numbered diffraction order cannot be selected as a diffraction order where the highest diffraction efficiency occurs at 400 nm. In addition, if an odd-numbered diffraction order is selected, sufficient diffraction efficiencies cannot be simultaneously obtained at the two wavelengths, resulting in an insufficient spot light amount. Furthermore, there is a problem as to how to correct spherical aberration for optical information recording media which use the same operating wavelength and have different protective layer thicknesses.

EP 1,296,317 discloses the pre-characterising portion of claim 1.

The present invention has been made in consideration of the above problems in the prior art, and has as its object to provide an optical pickup apparatus which increases the degree of freedom in the design of an objective lens, has a simple arrangement, and can properly record/reproduce information on/from a plurality of optical information recording media, and an optical system for the optical pickup apparatus.

According to the present invention, there is provided an optical pickup apparatus comprising a first laser source which emits a first beam, a second laser source which emits a second beam having a polarization plane substantially perpendicular to a polarization plane of the first beam, a polarization diffraction element which selectively diffracts one of the first beam and the second beam in accordance with polarized states thereof (e.g., the directions of the polarization planes), and an objective lens which records and/or reproduces information by focusing the first beam which has passed through the polarization diffraction element onto an information recording surface of a first optical information recording medium, and records and/or reproduces information by focusing the second beam which has passed through the polarization diffraction element onto an information recording surface of a second optical information recording medium.

Assume that in spite of the fact that the thickness of the protective layer of an optical information recording medium (to be also referred to as an optical disc) using the first beam is different from that of the protective layer of an optical information recording medium using the second beam, the wavelength of the first beam is equal to that of the second beam. In this case, if the same optical system is used, spherical aberration occurs with respect to one beam.

According to the present invention, however, a diffraction effect is applied to only one beam through the polarization diffraction unit to suppress the occurrence of spherical aberration at the use of both the optical information recording media, thereby properly recording and/or reproducing information. Even if different numerical apertures (NAs) are used, only one beam which exceeds a required numerical aperture is formed into flare through the polarization diffraction unit to properly record and/or reproduce information on/from either of the optical information recording media.

According to the present invention, in the optical pickup apparatus described in the first aspect, the first laser source and the second laser source emit beams having different wavelengths, the objective lens includes a refraction lens, which has a positive refractive power, and a diffraction lens structure, which has a plurality of rings with fine stepped portions formed on at least one of optical surfaces of the refraction lens, and a diffraction order in the diffraction lens structure at which a highest diffraction efficiency is obtained with respect to a beam having a shorter wavelength is different from a diffraction order at which a highest diffraction efficiency is obtained with respect to a beam having a longer wavelength, and the polarization diffraction element generates diffracted light which exhibits a highest diffraction efficiency at a predetermined diffraction order other than 0 when one of the first beam and the second beam is incident in a predetermined polarized state.

When, for example, information is to be recorded and/or reproduced on/from optical information recording media, such as a CD, DVD, and high-density DVD, which differ in protective layer thickness or numerical aperture (NA), a diffraction effect is applied to only one beam through the polarization diffraction unit. This makes it possible to suppress the occurrence of spherical aberration upon use of any optical information recording medium, and to properly record and/or reproduce information. In addition, with regard to different numerical apertures (NAs), a beam of only one beam which exceeds a required numerical aperture is formed into flare through the polarization diffraction unit to properly record and/or reproduce information on/from either of the optical information recording media.

According to a preferred aspect of the present invention, the polarization diffraction element described above generates diffracted light with a diffraction efficiency of not less than 85% with respect to one of two incident light beams having orthogonal polarization planes.

According to a preferred aspect of the present invention, in the optical pickup apparatus described above, letting $\lambda 1$ be a wavelength of the first beam, m1 be a diffraction order at which a highest diffraction efficiency is obtained when the first beam passes through the diffraction lens structure, $\lambda 2$ ($\lambda 2 > \lambda 1$) be a wavelength of the second beam, and m2 be a diffraction order at which a highest diffraction efficiency is obtained when the second beam passes through the diffraction lens structure, the following condition is satisfied, and the polarization diffraction unit selectively generates diffracted light when one beam passes therethrough

$$0.9 < |m1 \cdot \lambda 1| / |m2 \cdot \lambda 2| < 1.1 \qquad \ldots (1)$$

According to a preferred aspect of the present invention, the optical pickup apparatus described above includes a third laser source which emits a third beam having a wavelength $\lambda 3$ such that a polarization plane becomes substantially perpendicular to a polarization plane of the first beam or the second beam, and letting $\lambda 1$ ($\lambda 1 < \lambda 3$) be a wavelength of the first beam, m1 be a diffraction order at which a highest diffraction efficiency is obtained when the first beam passes through the diffraction lens structure, $\lambda 2$ ($\lambda 1 < \lambda 2 < \lambda 3$) be a wavelength of the second beam, m2 be a diffraction order at which a highest diffraction efficiency is obtained when the second beam passes through the diffraction lens structure, and m3 be a diffraction order at which a highest diffraction efficiency is obtained when the third beam passes through the diffraction lens structure, the following condition is satisfied, and the polarization diffraction unit selectively generates diffracted light when one beam or two beams pass therethrough

$$0.9 < |m1 \cdot \lambda 1| / |m2 \cdot \lambda 2| < 1.1 \qquad \ldots (2)$$

$$|m3 \cdot \lambda 3| / |m1 \cdot \lambda 1| < 0.9 \text{ or}$$

$$|m3 \cdot \lambda 3| / |m1 \cdot \lambda 1| > 1.1 \qquad \ldots (3)$$

According to a preferred of the present invention, the polarization diffraction unit described above selectively diffracts the two beams having the aligned polarization planes, and diffraction efficiencies for the two wavelengths become maximized at different diffraction orders.

According to a preferred aspect of the present invention, the polarization diffraction unit described above is driven integrally with the objective lens.

According to a preferred aspect of the present invention, the polarization diffraction unit described above is configured such that a birefringent medium and an isotropic medium are placed in tight contact with each other in an optical axis direction.

According to a preferred aspect of the present invention, the birefringent medium described above has a cross-section which is taken along a plane perpendicular to a traveling direction of incident light and is formed concentrically, and a cross-section which is taken along a plane in a radial direction including the traveling direction of the incident light and is formed in a sawtooth shape.

As is obvious from the respective aspects described above, according to the present invention, there is provided an optical pickup apparatus which can properly record on and/or reproduce information from a high-density DVD, a conventional DVD, and a CD.

The above and many other objects, features and advantages of the present invention will become manifest to those skilled in the art upon making reference to the following detailed description and accompanying drawings in which preferred embodiments incorporating the principle of the present invention are shown by way of illustrative examples.

In the drawings:-

Figs. 1 and 2 are schematic views showing the schematic arrangements of optical pickup apparatuses according to the first and second embodiments of the present invention, respectively;

Fig. 3 is a sectional view of a polarization hologram element used in the optical pickup apparatus according to the present invention;

Figs. 4 to 8 are schematic views showing the schematic arrangements of optical pickup apparatuses according to the third to seventh embodiments of the present invention, respectively; and

Fig. 9 is a partial sectional view showing the diffraction structure of an objective lens used in the optical pickup apparatus according to the present invention.

Several preferred embodiments of the present invention will be described below with reference to the accompanying drawings.

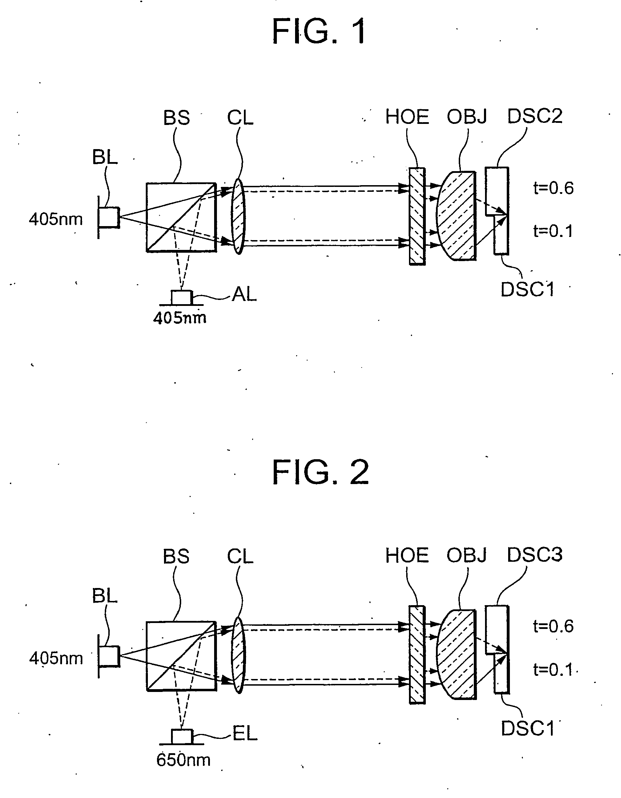

Fig. 1 is a schematic view showing the schematic arrangement of an optical pickup apparatus according to the first embodiment of the present invention which can record/reproduce information on/from a high-density DVD (DSC1) and an optical disc DSC2 (hereinafter, refers to as a "quasi-high-density DVD), which has a protective layer of the same thickness of 0.6 mm as a conventional DVD, through an objective lens OBJ having a numerical aperture (NA) of 0.6 to 0.65 by making use of a light source having the wavelength of 405 nm as in the high-density DVD.

Referring to Fig. 1, the light beam (first beam) emitted from a first semiconductor laser BL (wavelength $\lambda 1 = $ 380 nm to 450 nm, 405 nm in this case) serving as the first light source passes through a beam splitter BS is converted into a parallel light beam by a collimator CL. This light beam then passes through a polarization hologram element HOE as a polarization diffraction unit, and is focused on the information recording surface of a first optical disc DSC1 by an objective lens OBJ having a positive refractive power and a numerical aperture (NA) of 0.85 through the protective layer (thickness t = 0.09 to 0.11 mm, 0.1 mm in this case) of the first optical disc DSC1, thereby forming a focused light spot on the information recording surface. By detecting the reflected light with a photodetector (not shown), the read signal of the information recorded on the first optical disc DSC1 is obtained.

Referring to Fig. 1, a second semiconductor laser AL (wavelength $\lambda 2 = $ 380 nm to 450 nm, 405 nm in this case) serving as the second light source emits a light beam (second beam) with its polarization plane differing from that of the light beam emitted from the first semiconductor laser BL by 90°. This light beam is reflected by the beam splitter BS and converted into a parallel light beam by the collimator CL. This light beam then passes through the polarization hologram element HOE serving as a polarization diffraction unit, and is focused on the information recording surface of a second optical disc DSC2 by the objective lens OBJ through the protective layer (thickness t = 0.5 to 0.7 mm, 0.6 mm in this case) of the second optical disc DSC2, thereby forming a focused light spot on the information recording surface. By detecting the reflected light with the photodetector (not shown), the read signal of the information recorded on the second optical disc DSC2 is obtained.

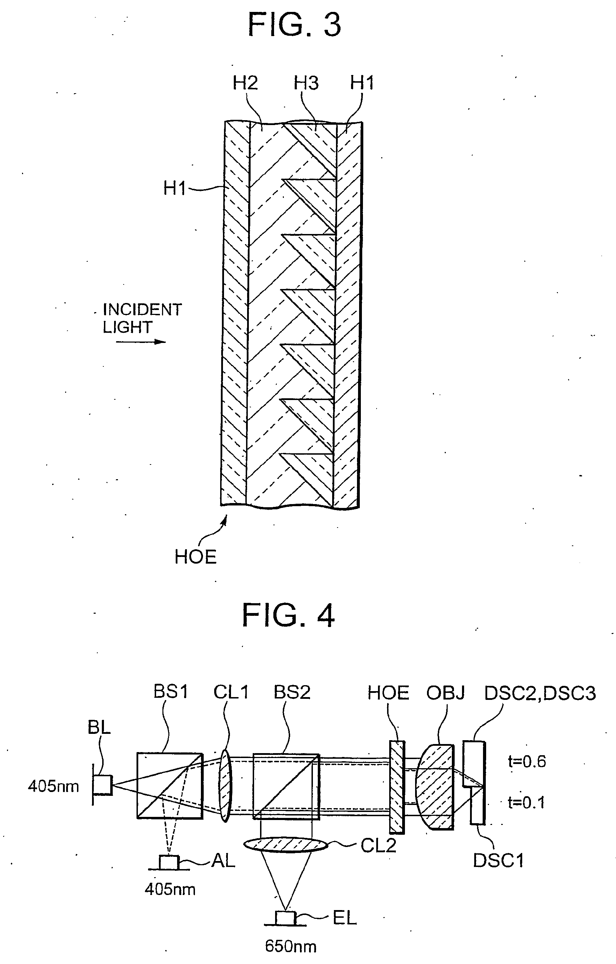

The polarization hologram element HOE has a cross-sectional shape (a cross-sectional shape in a plane including an optical axis) like that shown in Fig. 3 in a direction perpendicular to the optical axis.

Referring to Fig. 3, the polarization hologram element includes an isotropic medium H2, a birefringent medium H3, and a pair of glass plates H1 which are so placed as to sandwich these media. As shown in Fig. 3, the birefringent medium H3 has a sawtooth cross-sectional shape in the traveling direction of incident light, and has a diffraction structure in which many sawtooth-like portions concentrically extend from the center to the circumference. The practical shape of the birefringent medium H3 is not limited to that shown in Fig. 3. This element may have another sawtooth shape, and the inclined surface of each sawtooth may have a stepped shape. The isotropic medium H2 has a shape complementary to the shape of the birefringent medium H3, and is in tight contact with the sawtooh-like surface of the birefringent medium.

The isotropic medium H2 is a substance having a refractive index n for incident light. The birefringent medium H3 has the property of exhibiting the refractive index n when the polarization plane of incident light is in a predetermined direction, and a refractive index n' when the polarization plane of incident light is perpendicular to the predetermined direction. That is, when an emitted light beam (first beam) from the first semiconductor laser BL or an emitted light beam (second beam) from the second semiconductor laser AL is incident on the polarization hologram element HOE in a predetermined polarized state, the polarization hologram element HOE generates diffracted light exhibiting a highest diffraction efficiency at a predetermined diffraction order other than 0.

According to the first embodiment, the polarization plane of the light beam emitted from the first semiconductor laser BL is made different from that of the light beam emitted from the second semiconductor laser AL by 90°. When, therefore, the polarization plane of the light beam emitted from the first semiconductor laser BL is set in the predetermined direction, even passing through the polarization hologram element HOE is equivalent to passing through a homogeneous plane-parallel medium. For this reason, the divergence angle of the light remains the same, and the light is incident on the objective lens OBJ in this state. This makes it possible to properly record and/or reproduce information on/from the first optical disc DSC1 having a 0.1 mm thick protective layer.

On the other hand, the light beam emitted from the second semiconductor laser AL passes through the media of the polarization hologram element HOE which have the refractive indexes n and n', and hence the diffraction structure at the interface between the media produces a diffraction effect equivalent to that of a positive lens. This causes the light to be incident on the objective lens OBJ upon changing the divergence angle. Even when the same objective lens OBJ is used, therefore, information can be properly recorded and/or reproduced on/from the second optical disc DSC2 having a 0.6 mm thick protective layer while spherical aberration is corrected.

In addition, when the second optical disc DSC2 is used, the selective diffraction effect of the polarization hologram element HOE forms the outside light beam, which positions outside a predetermined numerical aperture necessary for the second optical disc DSC2, into flare to prevent it from contributing to the formation of a light spot, thereby allowing the polarization hologram element HOE to have a stop function.

In this case, the polarization hologram element HOE preferably generates diffracted light with a diffraction efficiency of 85% or more with respect to at least one of incident light beams of a predetermined wavelength which have orthogonal polarization planes.

Fig. 2 is a schematic view showing the schematic arrangement of an optical pickup apparatus according to the second embodiment of the present invention which can record/reproduce information on/from a high-density DVD (DSC1) and a conventional DVD (DSC3).

Referring to Fig. 2, the light beam (first beam) emitted from a first semiconductor laser BL (wavelength $\lambda 1$ = 380 nm to 450 nm, 405 nm in this case) as a first light source serving as the first light source passes through a beam splitter BS is converted into a parallel light beam by a collimator CL. This light beam then passes through a polarization hologram element HOE as a polarization diffraction unit, and is focused on the information recording surface of a first optical disc DSC1 by an objective lens OBJ having a numerical aperture (NA) of 0.85 through the protective layer (thickness t = 0.09 to 0.11 mm, 0.1 mm in this case) of the first optical disc DSC1, thereby forming a focused light spot on the information recording surface. By detecting the reflected light with a photodetector (not shown), the read signal of the information recorded on the first optical disc DSC1 is obtained.

Referring to Fig. 2, a second semiconductor laser EL (wavelength $\lambda 2$ = 600 nm to 700 nm, 650 nm in this case) serving as the second light source emits a light beam (second beam) with its polarization plane differing from that of the light beam emitted from the first semiconductor laser BL by 90°. This light beam is reflected by the beam splitter BS and converted into a parallel light beam by-the collimator CL. This light beam then passes through the polarization hologram element HOE serving as a polarization diffraction unit, and is focused on the information recording surface of a second optical disc DSC3 by the objective lens OBJ through the protective layer (thickness t = 0.5 to 0.7 mm, 0.6 mm in this case) of the second optical disc DSC3, thereby forming a focused light spot on the information recording surface. By detecting the reflected light with the photodetector (not shown), the read signal of the information recorded on the second optical disc DSC2 is obtained.

Let m1 be the diffraction order at which the highest diffraction efficiency is obtained when the first beam having the wavelength $\lambda 1$ = 405 nm passes through a diffraction structure (diffraction lens structure) provided on the refracting surface of the objective lens OBJ, and m2 be the diffraction order at which the highest diffraction efficiency is obtained when the second beam having the wavelength $\lambda 2$ = 650 nm passes through the diffraction structure. In this case, if, for example, diffraction orders are selected such that m1 = 8 and m2 = 5, or m1 = 6 and m2 = 4, the difference in diffraction effect between the respective wavelengths can be used without a considerable decrease in diffraction effect at each wavelength. This effect makes it possible to correct residual spherical aberration of the spherical aberration due to the difference in thickness between the protective layers of the respective optical discs which cannot be corrected by the difference in divergence angle between incident light beams on the objective lens OBJ alone. In addition, the effect makes it possible to correct chromatic aberration due to variations in the wavelength of light from the 405-nm light source and an instantaneous wavelength fluctuation, and to form a light beam outside a light beam of the second beam which corresponds to a predetermined numerical aperture into flare. In this case, the polarization hologram element HOE is only made to change the divergence angle of a light beam corresponding to the second beam. However, the polarization hologram element HOE can also be made to have a function of correcting spherical aberration due to the difference in protective layer thickness for the second beam or a stop effect based on the formation of flare.

$$0.9 < |m1 \cdot \lambda 1| / |m2 \cdot \lambda 2| < 1.1 \qquad \ldots (1)$$

Fig. 4 is a schematic view showing the schematic arrangement of an optical pickup apparatus according to the third embodiment of the present invention which can record/reproduce information on a high-density DVD (DSC1) and a quasi-high-density DVD (DSC2), and a conventional DVD (DSC3).

Referring to Fig. 4, the light beam (first beam) emitted from a first semiconductor laser BL (wavelength ë1 = 380 nm to 450 nm, 405 nm in this case) serving as the first light source passes through a first beam splitter BS1 is converted into a parallel light beam by a first collimator CL1. This light beam then passes through a second beam splitter BS2 and a polarization hologram element HOE as a polarization diffraction unit, and is focused on the information recording surface of a first optical disc DSC1 by an objective lens OBJ having a numerical aperture (NA) of 0.85 through the protective layer (thickness t = 0.09 to 0.11 mm, 0.1 mm in this case) of the first optical disc DSC1, thereby forming a focused light spot on the information recording surface. By detecting the reflected light with a photodetector (not shown), the read signal of the information recorded on the first optical disc DSC1 is obtained.

Referring to Fig. 4, a second semiconductor laser AL (wavelength $\lambda 2$ = 380 nm to 450 nm, 405 nm in this case) serving as the second light source emits a light beam (second beam) with its polarization plane differing from that of the light beam emitted from the first semiconductor laser BL by 90°. This light beam is reflected by the first beam splitter BS1 and converted into a parallel light beam by the first collimator CL1. This light beam then passes through the second beam splitter BS2 and the polarization hologram element HOE serving as a polarization diffraction unit, and is focused on the information recording surface of a second optical disc DSC2 by the objective lens OBJ through the protective layer (thickness t = 0.5 to 0.7 mm, 0.6 mm in this case) of the second optical disc DSC2, thereby forming a focused light spot on the information recording surface. By detecting the reflected light with the photodetector (not shown), the read signal of the information recorded on the second optical disc DSC2 is obtained.

Referring to Fig. 4, a third semiconductor laser EL (wavelength $\lambda 3$ = 600 nm to 700 nm, 650 nm in this case) serving as the third light source emits a light beam (third beam) with its polarization plane differing from that of the light beam emitted from the first semiconductor laser BL by 90°. This light beam is converted into a parallel light beam by the second collimator CL2. This light beam is reflected by the second beam splitter BS2 and then passes through the polarization hologram element HOE serving as a polarization diffraction unit, and is focused on the information recording surface of a third optical disc DSC3 by the objective lens OBJ through the protective layer (thickness t = 0.5 to 0.7 mm, 0.6 mm in this case) of the third optical disc DSC3, thereby forming a focused light spot on the information recording surface. By detecting the reflected light with the photodetector (not shown), the read signal of the information recorded on the third optical disc DSC3 is obtained.

In the third embodiment, the light beam emitted from the first semiconductor laser BL has a polarization plane different from those of the light beams emitted from the second and third semiconductor lasers AL and EL by 90°. When, therefore, the polarization plane of the light beam emitted from the first semiconductor laser BL is set in a predetermined direction, even passing through the polarization hologram element HOE is equivalent to passing through a homogeneous plane-parallel medium. For this reason, the divergence angle of the light remains the same, and the light is incident on the objective lens OBJ in this state. This makes it possible to properly record and/or reproduce information on/from the first optical disc DSC1 having a 0.1 mm thick protective layer.

On the other hand, the light beams emitted from the second semiconductor laser AL and third semiconductor laser EL pass through the media of the polarization hologram element HOE which have refractive indexes n and n', and hence the diffraction structure at the interface between the media produces a diffraction effect equivalent to that of a positive lens. This causes the light to be incident on the objective lens OBJ upon changing the divergence angle. Even when the same objective lens OBJ is used, therefore, information can be properly recorded and/or reproduced on/from second and third optical discs DSC2 and DSC3 each having a 0.6 mm thick protective layer while spherical aberration is corrected. Out of the light beams emitted from the second and third semiconductor lasers AL and EL, providing a diffraction effect of forming a light beam passing outside the numerical aperture NA of the objective lens, i.e., 0.65, into flare makes the polarization hologram element HOE serve as a stop. This reduces coma due to a disc tilt, and hence makes it possible to properly record and/or reproduce information.

The polarization hologram element HOE selectively diffracts the second and third beams whose polarization planes coincide with each other. The diffraction order at which the highest diffraction effect is obtained for a beam having a wavelength λ2 differs from that for a beam having a wavelength λ3.

More specifically, a diffraction structure (diffraction lens structure) is provided on the refracting surface of the objective lens OBJ, and a diffraction order m2 (third order) at which the diffraction efficiency for the second beam having a short wavelength is made different from a diffraction order m3 (second order) at which the diffraction efficiency for the third beam having a long wavelength becomes maximum. This makes it possible to obtain sufficient diffraction efficiencies for both the second beam and the third beam, and almost uniformly provide diffraction effects to change a divergence angle for these two beams.

The diffraction structure of the objective lens OBJ will be described in more detail.

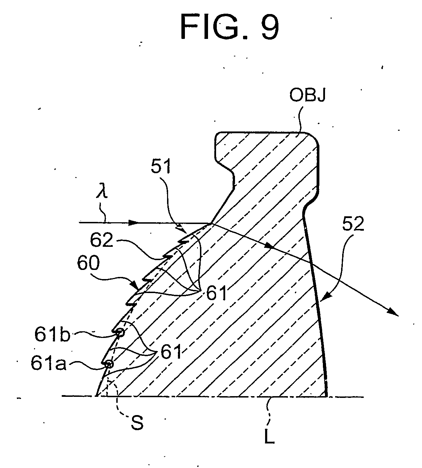

As shown in Fig. 9, the objective lens OBJ is a single lens made of a plastic resin having an incident surface 51 and exit surface 52 both of which are aspheric surfaces, with the incident surface 51 having a convex shape.

Note that the objective lens OBJ may be formed by combining a plurality of optical elements. In this case, it suffices if a convex optical surface is provided on the object side of at least one of these optical elements, and a diffraction structure 60 to be described later is provided on at least one of the optical surfaces on the object side and image side.

The diffraction structure 60 which provides a diffraction effect for an incident light beam is formed on the entire area of the incident surface 51. The diffraction structure 60 is comprised of a plurality of diffraction rings 61 which are almost concentrically formed around an optical axis L and have diffraction effects for incident light beams.

Each diffraction ring 61 is formed in the shape of a sawtooth when viewed from a plane along the optical axis L (meridional sectional view), and provides a positive diffraction effect for a light beam incident on each diffraction ring 61 which has a specific wavelength by giving a predetermined phase difference to the light beam.

Note that the "positive diffraction effect" indicates a diffraction effect which is provided for a passing light beam when spherical aberration is to be produced in the under direction to cancel out spherical aberration which has occurred in the over direction due to an increase in wavelength.

A start point 61a and end point 61b of each diffraction ring 61 are located on a predetermined aspherical surface S (to be referred to as a "generating aspherical surface" hereinafter) shown in Fig. 9, and the shape of each diffraction ring 61 can be defined by a displacement amount in the optical axis L direction with respect to the generating aspherical surface S. Reference numeral 62 denotes a stepped surface 62.

In addition, the generating aspherical surface S can be defined by a function associated with the distance from the optical axis L with the optical axis L serving as a rotation center. Note that a method of designing the diffraction rings 61 is known, and hence a description thereof will be omitted. Such a phase difference applying structure may be provided for only the exit surface 52. Alternatively, such structures may be provided for both the incident surface 51 and the exit surface 52.

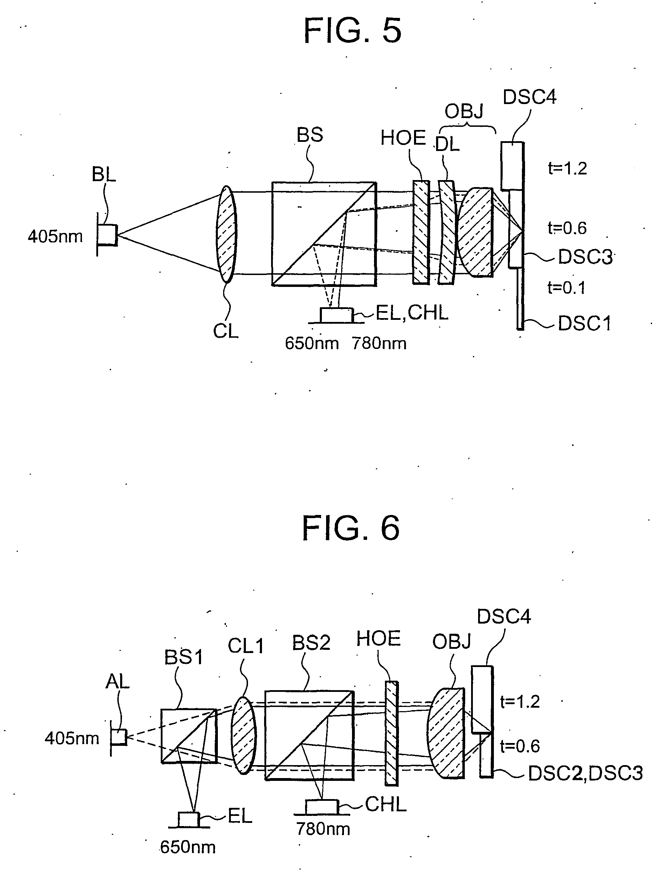

Fig. 5 is a schematic view showing the schematic arrangement of an optical pickup apparatus according to the fourth embodiment of the present invention which can record/reproduce information on/from a high-density DVD (DSC1), a conventional DVD (DSC3), and a CD (DSC4).

Referring to Fig. 5, the light beam (first beam) emitted from a first semiconductor laser BL (wavelength λ1 = 380 nm to 450 nm, 405 nm in this case) serving as the first light source passes through a collimator CL and a beam splitter BS. This light beam then passes through a polarization hologram element HOE as a polarization diffraction unit, and is focused on the information recording surface of a first optical disc DSC1 by an objective lens OBJ comprising at least a first lens, which is a diffraction lens having a diffraction structure formed on at least one of the optical surfaces thereof from a plurality of rings having fine stepped portions, and a second lens which is a refraction lens through the protective layer (thickness t = 0.09 to 0.11 mm, 0.1 mm in this case) of the first optical disc DSC1, thereby forming a focused light spot on the information recording surface. In this case, the objective lens OBJ has a numerical aperture of 0.85. By detecting the reflected light with a photodetector (not shown), the read signal of the information recorded on the first optical disc DSC1 is obtained.

Referring to Fig. 5, a second semiconductor laser EL serving as the second light source and a third semiconductor laser CHL serving as the third light source are integrated into one unit, thereby forming so-called two lasers in one package. The second semiconductor laser EL (wavelength λ2 = 600 nm to 700 nm, 650 nm in this case) emits a light beam (second beam) with its polarization plane differing from that of the light beam emitted from the first semiconductor laser BL by 90°. This light beam is reflected by the beam splitter BS and incident as a divergent light beam on the polarization hologram element HOE serving as a diffraction polarization diffraction unit, and is focused on the information recording surface of a second optical disc DSC3 by an objective lens OBJ comprising at least a first lens, which is a diffraction lens having a diffraction structure formed on at least one of the optical surfaces thereof from a plurality of rings having fine stepped portions, and a second lens which is a refraction lens through the protective layer (thickness t = 0.5 to 0.7 mm, 0.6 mm in this case) of the second optical disc DSC3, thereby forming a focused light spot on the information recording surface. By detecting the reflected light with a photodetector (not shown), the read signal of the information recorded on the second optical disc DSC3 is obtained.

In addition, referring to Fig. 5, the third semiconductor laser CHL serving as the third light source (wavelength λ3 = 700 nm to 800 nm, 780 nm in this case) emits a light beam (third beam) with its polarization plane being set in the same direction as that of the light beam emitted from the first semiconductor laser BL. This light beam is reflected by the beam splitter BS and passes as a divergent light beam through the polarization hologram element HOE serving as a polarization diffraction unit. The light beam is then focused on the information recording surface of a third optical disc DSC4, through the protective layer (thickness t = 1.1 to 1.3 mm, 1.2 mm in this case) of the third optical disc DSC4, by the objective lens OBJ comprising a first lens having a diffraction structure formed on at least one of the optical surfaces thereof from a plurality of rings having fine stepped portions and the second lens which is a refraction lens. This forms a focused light spot on the information recording surface. By detecting the reflected light with a photodetector (not shown), the read signal of the information recorded on the third optical disc DSC4 is obtained.

According to the fourth embodiment, since the two lasers in one package are used, the second semiconductor laser EL and third semiconductor laser CHL are placed at an equal distance from the objective lens OBJ, and hence equal divergence angles are set. In this state, aberration due to the difference in thickness between the protective layers cannot be corrected. A polarization hologram element is therefore used in the following manner.

The polarization plane of each of the light beams emitted from the first semiconductor laser BL and the third semiconductor laser CHL is made different from that of the second light beam emitted from the second semiconductor lasers EL by 90°. When, therefore, the polarization plane of the light beam emitted from the first semiconductor laser BL is set in the predetermined direction, even passing through the polarization hologram element HOE is equivalent to passing through a homogeneous plane-parallel medium. For this reason, the divergence angle of the light remains the same, and the light is incident on the objective lens OBJ in this state. The light beam from the first semiconductor laser BL is made incident as a parallel beam on the objective lens OBJ, and the light beam from the third semiconductor laser CHL is made incident as a divergent light beam on the objective lens OBJ. This makes it possible to properly record and/or reproduce information on/from the first optical disc DSC1 having a 0.1 mm thick protective layer and the third optical disc DSC4 having a 1.2 mm thick protective layer.

On the other hand, the light beam emitted from the second semiconductor laser EL passes through the media of the polarization hologram element HOE which have refractive indexes n and n', and hence the diffraction structure at the interface between the media produces a diffraction effect equivalent to that of a positive lens. This causes the light to be incident on the objective lens OBJ upon changing the divergence angle. Even when the same objective lens OBJ is used, therefore, information can be properly recorded on and/or reproduced from the second optical disc DSC3 through a protective layer (t = 0.6 mm) different from the 1.2 mm thick protective layer while spherical aberration is corrected.

As described in the fourth embodiment, let m1 be the diffraction order at which the highest diffraction efficiency is obtained when the first beam having the wavelength $\lambda 1 = 405$ nm passes through the diffraction structure provided on the refracting surface of the objective lens OBJ, m2 be the diffraction order at which the highest diffraction efficiency is obtained when the second beam having the wavelength $\lambda 2 = 650$ nm passes through the diffraction structure, and m3 be the diffraction order at which the highest diffraction efficiency is obtained when the third beam having the wavelength $\lambda 3 = 780$ nm passes through the diffraction structure. In this case, if, for example, diffraction orders are selected such that m1 = 8, m2 = 5, and m3 = 4, or m1 = 6, m2= 4, and m3= 3, the difference in diffraction effect between the respective wavelengths can be used without a considerable decrease in diffraction effect at each wavelength. This effect makes it possible to correct residual spherical aberration of the spherical aberration due to the difference in thickness between the protective layers of the respective optical discs which cannot be corrected by the difference in divergence angle between incident light beams on the objective lens OBJ alone. In addition, the effect makes it possible to correct chromatic aberration due to variations in the wavelength of light from the 405-nm light source and an instantaneous wavelength fluctuation, and to form a light beam outside a light beam of the second beam or third beam which corresponds to a predetermined numerical aperture into flare. In this case, the polarization hologram element HOE is only made to change the divergence angle of a light beam corresponding to the second beam. However, the polarization hologram element HOE can also be made to have a function of correcting spherical aberration due to the difference in protective layer thickness for the second beam or a stop effect based on the formation of flare. Dividing the light beam passing area of the polarization hologram element HOE into three areas and providing them with diffraction structures based on different specifications will make it easy to form flare in the use of the second and third beams.

$$0.9 < |m1 \cdot \lambda 1| / |m2 \cdot \lambda 2| < 1.1 \qquad \ldots (2)$$

$$|m3 \cdot \lambda 3| / |m1 \cdot \lambda 1| < 0.9 \text{ or}$$

$$|m3 \cdot \lambda 3| / |m1 \cdot \lambda 1| > 1.1 \qquad \ldots (3)$$

Fig. 6 is a schematic view showing the schematic arrangement of an optical pickup apparatus according to the fifth embodiment of the present invention which can record/reproduce information on a quasi-high-density DVD (DSC2), a conventional DVD (DSC3), and a CD (DSC4).

Referring to Fig. 6, the light beam (first beam) emitted from a first semiconductor laser AL (wavelength ë1 = 380 nm to 450 nm, 405 nm in this case) serving as the first light source passes through a first beam splitter BS1 is converted into a parallel light beam by a collimator CL. This light beam then passes through a second beam splitter BS2 and is selectively diffracted by a polarization hologram element HOE as a polarization diffraction unit. The parallel light beam is then converted into a convergent light beam and incident on an objective lens OBJ having a numerical aperture (NA) of 0.65. This light beam is focused on the information recording surface of a first optical disc DSC2 through the protective layer (thickness t = 0.5 to 0.7 film, 0.6 mm in this case) of the first optical disc DSC1, thereby forming a focused light spot on the information recording surface. By detecting the reflected light with a photodetector (not shown), the read signal of the information recorded on the first optical disc DSC2 is obtained. Chromatic aberration in the short-wavelength light source is corrected by the selective diffraction effect of the above HOE.

Referring to Fig. 6, a second semiconductor laser EL (wavelength $\lambda2$ = 600 nm to 700 nm, 650 nm in this case) serving as the second light source emits a light beam (second beam) with its polarization plane differing from that of the light beam emitted from the first semiconductor laser AL by 90°. This light beam is reflected by the first beam splitter BS1 and converted into a parallel light beam by the collimator CL. This light beam then passes through the second beam splitter BS2 and the polarization hologram element HOE serving as a polarization diffraction unit, and is focused on the information recording surface of a second optical disc DSC3 by the objective lens OBJ through the protective layer (thickness t = 0.5 to 0.7 mm, 0.6 mm in this case) of the second optical disc DSC3, thereby forming a focused light spot on the information recording surface. By detecting the reflected light with the photodetector (not shown), the read signal of the information recorded on the second optical disc DSC3 is obtained.

In addition, referring to Fig. 6, a third semiconductor laser CHL (wavelength $\lambda3$ = 700 nm to 800 nm, 780 nm in this case) serving as the third light source emits a light beam (third beam) with its polarization plane differing from that of the light beam emitted from the first semiconductor laser AL by 90°. This light beam is reflected by the second beam splitter BS2 and passes as a divergent light beam through the polarization hologram element HOE. The light beam is then focused on the information recording surface of a third optical disc DSC4 by the objective lens OBJ through the protective layer (thickness t = 1.1 to 1.3 mm, 1.2 mm in this case) of the third optical disc DSC4, thereby forming a focused light spot on the information recording surface. In this case, at least one of the surfaces of the objective lens OBJ is a diffraction surface. Letting $\lambda1$ be the wavelength of the first light source, m1 be the diffraction order at which the highest diffraction efficiency is obtained, $\lambda2$ is the wavelength of the second light source, m2 is the diffraction order at which the highest diffraction efficiency is obtained, $\lambda3$ is the wavelength of the third light source, and m3 is the diffraction order at which the highest diffraction efficiency is obtained, then

$$0.9 < |m1 \cdot \lambda1| / |m2 \cdot \lambda2| < 1.1 \qquad \ldots(2)$$

$$|m3 \cdot \lambda3| / |m1 \cdot \lambda1| < 0.9 \text{ or}$$

$$|m3 \cdot \lambda3| / |m1 \cdot \lambda1| > 1.1 \qquad \ldots(3)$$

This diffraction effect corrects spherical aberration due to the difference in protective layer thickness between the first and second optical discs DSC2 and DSC3 and the difference in wavelength in cooperation with the difference in divergence angle between incident light beams on the objective lens OBJ. By detecting the reflected light with a photodetector (not shown), the read signal of the information recorded on the third optical disc DSC4 is obtained.

According to the fifth embodiment, the polarization plane of each of the light beams emitted from the second semiconductor laser EL and third semiconductor laser CHL is made different from that of the light beam emitted from the first semiconductor laser AL by 90°. When, therefore, the polarization plane of each of the light beams emitted from the second semiconductor laser EL and third semiconductor laser CHL is set in the predetermined direction, even passing through the polarization hologram element HOE is equivalent to passing through a homogeneous plane-parallel medium. For this reason, the divergence angle of the light remains the same, and the light is incident on the objective lens OBJ in this state. The second light beam is made incident as a parallel beam on the objective lens OBJ, and the third light beam is made incident as a divergent light beam on the objective lens OBJ. This makes it possible to properly record and/or reproduce information on/from the second optical disc DSC3 having a 0.6 mm thick protective layer and the third optical disc DSC4 having a 1.2 mm thick protective layer.

On the other hand, the light beam emitted from the first semiconductor laser AL passes through the media of the polarization hologram element HOE which have refractive indexes n and n', and hence the diffraction structure at the interface between the media produces a diffraction effect equivalent to that of a positive lens. This causes the light to be incident on the objective lens OBJ upon changing the divergence angle. Even when the same objective lens OBJ is used, therefore, chromatic aberration with respect to only the first beam can be corrected.

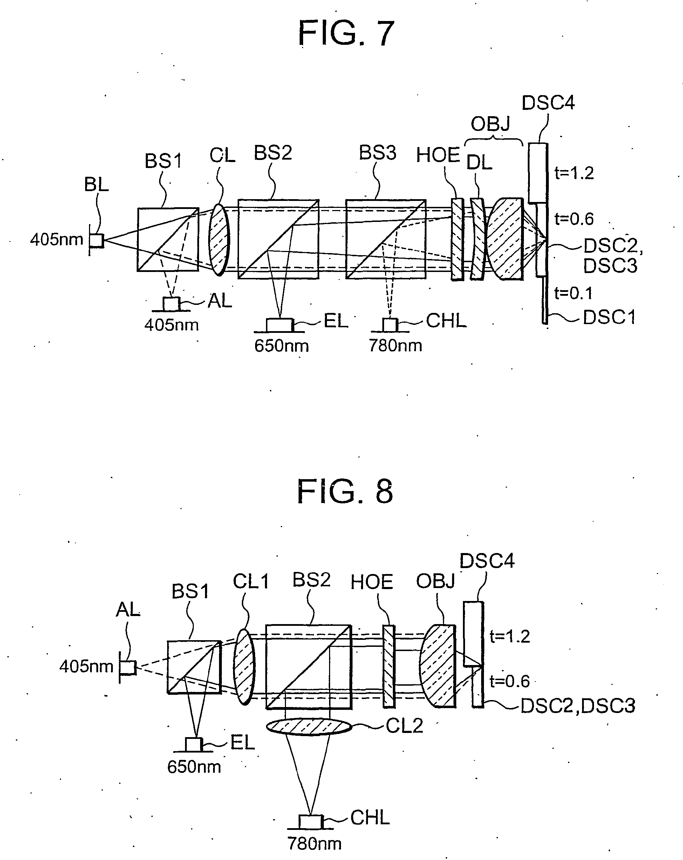

Fig. 7 is a schematic view showing the schematic arrangement of an optical pickup apparatus according to the sixth embodiment of the present invention which can record/reproduce information on a high-density DVD (DSC1), a quasi-high-density DVD (DSC2), a conventional DVD (DSC3), and a CD (DSC4).

Referring to Fig. 7, the light beam (first beam) emitted from a first semiconductor laser BL (wavelength $\lambda1 = $ 380 nm to 450 nm, 405 nm in this case) serving as the first light source passes through a first beam splitter BS1 is converted into a parallel light beam by a collimator CL. This light beam then passes through a second beam splitter BS2 and third beam splitter BS3. The light beam further passes through a polarization hologram element HOE as a polarization diffraction unit, and is focused on the information recording surface of a first optical disc DSC1 by an objective lens OBJ comprising at least a first lens, which is a diffraction lens having a diffraction structure formed on at least one of the optical surfaces thereof from a plurality of rings having fine stepped portions, and a second lens which is a refraction lens through the protective layer (thickness t = 0.09 to 0.11 mm, 0.1 mm in this case) of the first optical disc DSC1, thereby forming a focused light spot on the information recording surface. By detecting the reflected light with a photodetector (not shown), the read signal of the information recorded on the first optical disc DSC1 is obtained.

Referring to Fig. 7, a second semiconductor laser AL (wavelength $\lambda1$ - 380 nm to 450 nm, 405 nm in this case) serving as the second light source emits a light beam (second beam) with its polarization plane differing from that of the light beam emitted from the first semiconductor laser BL by 90°. This light beam is reflected by the first beam splitter BS1 and converted into a parallel light beam by the collimator CL. This light beam then passes through the second beam splitter BS2 and third beam splitter BS3. The light beam further passes through the polarization hologram element HOE serving as a polarization diffraction unit, and is focused on the information recording surface of the second optical disc DSC2 by the objective lens OBJ comprising at least a first lens, which is a diffraction lens having a diffraction structure formed on at least one of the optical surfaces thereof from the plurality of rings having fine stepped portions, and a second lens which is a refraction lens through the protective layer (thickness t = 0.5 to 0.7 mm, 0.6 mm in this case) of the second optical disc DSC2, thereby forming a focused light spot on the information recording surface. By detecting the reflected light with the photodetector (not shown), the read signal of the information recorded on the second optical disc DSC2 is obtained.

In addition, referring to Fig. 7, a third semiconductor laser EL (wavelength $\lambda3$= 600 nm to 700 nm, 650 nm in this case) emits a light beam (third beam) with its polarization plane being set in the same direction as that of the light beam emitted from the first semiconductor laser BL. This light beam is reflected by the second beam splitter BS2 and passes through the third beam splitter BS3. The light beam is incident as a divergent light beam on the polarization hologram element HOE serving as a polarization diffraction unit, and then passes through it. Further, the light beam is focused on the information recording surface of a third optical disc DSC3 by the objective lens OBJ comprising at least a first lens, which is a diffraction lens having a diffraction structure formed on at least one of the optical surfaces thereof from the plurality of rings having fine stepped portions, and a second lens which is a refraction lens through the protective layer (thickness t = 0.5 to 0.7 mm, 0.6 mm in this case) of the third optical disc DSC3, thereby forming a focused light spot on the information recording surface. By detecting the reflected light with a photodetector (not shown), the read signal of the information recorded on the third optical disc DSC3 is obtained.

Furthermore, referring to Fig. 7, a fourth semiconductor laser CHL (wavelength $\lambda4$= 700 nm to 800 nm, 780 nm in this case) emits a light beam (fourth beam) with its polarization plane being set in the same direction as that of the light beam emitted from the first semiconductor laser BL. This light beam is reflected by the third beam splitter BS3 and is incident as a divergent light beam on the polarization hologram element HOE serving as a polarization diffraction unit, and then passes through it. Further, the light beam is focused on the information recording surface of a fourth optical disc DSC4 by the objective lens OBJ comprising at least a first lens, which is a diffraction lens having a diffraction structure formed on at least one of the optical surfaces thereof from a plurality of rings having fine stepped portions, and a second lens which is a refraction lens through the protective layer (thickness t = 1.1 to 1.3 mm, 1.2 mm in this case) of the fourth optical disc DSC4, thereby forming a focused light spot on the information recording surface. By detecting the reflected light with a photodetector (not shown), the read signal of the information recorded on the fourth optical disc DSC4 is obtained.

According to the sixth embodiment, the polarization plane of each of the light beams emitted from the first semiconductor laser BL, third semiconductor laser EL, and fourth semiconductor laser CHL is made different from that of the light beam emitted from the second semiconductor laser AL by 90°. The polarization hologram element HOE diffracts only the second beam emitted from the second semiconductor laser AL, thereby correcting spherical aberration due to the difference in protective layer thickness between the first and second optical discs DSC1 and DSC2 and providing a stop effect with respect to the second beam by the formation of flare.

The objective lens OBJ is comprised of the first lens, which is a diffraction lens having a diffraction structure formed on at least one of the optical surfaces thereof from a plurality of rings having fine stepped portions and the second lens which is a refraction lens. The diffraction structure is designed such that, letting m1 be the diffraction order at which the highest diffraction efficiency is obtained with respect to the wavelength $\lambda 1$, m2 be the diffraction order at which the highest diffraction efficiency is obtained with respect to the wavelength $\lambda 2$, and m3 be the diffraction order at which the highest diffraction efficiency is obtained with respect to the wavelength $\lambda 3$, different integers are set to m1, m2, and m3. In addition, in order to satisfy equations (2) and (3), for example, the diffraction structure is designed to set m1 = 8, m2 = 5, and m3 = 4 or m1 = 6, m2 = 4, and m3 = 3. This makes it possible to form good spots on optical discs having different protective layer thicknesses by using the differences in divergence angle between incident light beams without causing a decrease in diffraction efficiency to 85% or less at each wavelength.

On the other hand, the light beam emitted from the second semiconductor laser AL passes through the media of the polarization hologram element HOE which have refractive indexes n and n', and hence the diffraction structure at the interface between the media produces a diffraction effect equivalent to that of a positive lens. This causes the light to be incident on the objective lens OBJ upon changing the divergence angle. Even when the same objective lens OBJ is used, therefore, information can be properly recorded and/or reproduced on/from the second optical disc DSC2 having a 0.6-nm thick protective layer while spherical aberration is corrected.

In addition, when the second optical disc DSC2 is used, the selective diffraction effect of the polarization hologram element HOE forms the outside light beam, which positions outside a predetermined numerical aperture necessary for the second optical disc DSC2, into flare to prevent it from contributing to the formation of a light spot, thereby allowing the polarization hologram element HOE to have a stop function.

Fig. 8 is a schematic view showing the schematic arrangement of an optical pickup apparatus according to the seventh embodiment of the present invention which can record/reproduce information on a quasi-high-density DVD (DSC2), a conventional DVD (DSC3), and a CD (DSC4).

Referring to Fig. 8, the light beam (first beam) emitted from a first semiconductor laser AL (wavelength $\lambda 1$ = 380 nm to 450 nm, 405 nm in this case) serving as the first light source passes through a first beam splitter BS1 and is converted into a parallel light beam by a first collimator CL1. This light beam then passes through a second beam splitter BS2 and a polarization hologram element HOE as a polarization diffraction unit, and is focused on the information recording surface of a first optical disc DSC2 by an objective -lens OBJ through the protective layer (thickness t = 0.5 to 0.7 mm, 0.6 mm in this case) of the first optical disc DSC2, thereby forming a focused light spot on the information recording surface. By detecting the reflected light with a photodetector (not shown), the read signal of the information recorded on the first optical disc DSC2 is obtained.

Referring to Fig. 8, a second semiconductor laser EL (wavelength $\lambda 2$ = 600 nm to 700 nm, 650 nm in this case) serving as the second light source emits a light beam (second beam) with its polarization plane which is the same as that of the light beam emitted from the first semiconductor laser. This light beam is reflected by the first beam splitter BS1 and converted into a parallel light beam by a second collimator CL2. This light beam then passes through the second beam splitter BS2 and the polarization hologram element HOE serving as a polarization diffraction unit, and is focused on the information recording surface of a second optical disc DSC3 by the objective lens OBJ through the protective layer (thickness t = 0.5 to 0.7 mm, 0.6 mm in this case) of the second optical disc DSC3, thereby forming a focused light spot on the information recording surface. By detecting the reflected light with the photodetector (not shown), the read signal of the information recorded on the second optical disc DSC3 is obtained.

Referring to Fig. 8, a third semiconductor laser CHL (wavelength 13 = 700 nm to 800 nm, 780 nm in this case) serving as the third light source emits a light beam (third beam) with its polarization plane differing from that of the light beam emitted from the first semiconductor laser AL by 90°. This light beam is converted into a parallel light beam by the second collimator CL2. This light beam is reflected by the second beam splitter BS2 and then passes through the polarization hologram element HOE serving as a polarization diffraction unit, and is focused on the information recording surface of a third optical disc DSC4 by the objective lens OBJ through the protective layer (thickness t = 1.1 to 1.3 mm, 1.2 mm in this case) of the third optical disc DSC4, thereby forming a focused light spot on the information recording surface. By detecting the reflected light with the photodetector (not shown), the read signal of the information recorded on the_ third optical disc DSC4 is obtained.

In the seventh embodiment, at least one of the surfaces of the objective lens OBJ has a diffraction structure, and m1 = 6, m2 - 4, and m3 = 3 or m1 = 8, m2 = 5, and m3 = 4 where m1 is the diffraction order at which the highest diffraction efficiency is obtained when the first beam with the wavelength $\lambda 1$ = 405 nm passes through the lens, m2 is the diffraction order at which the highest diffraction efficiency is obtained when the second beam with the wavelength $\lambda 2$ = 650 nm passes through the lens, and m3 is the diffraction order at which the highest diffraction efficiency is obtained when the third beam with the wavelength $\lambda 3$ = 780 nm passes through the lens.

The diffraction structure is designed to correct spherical aberration due to the difference in protective layer thickness between the first and second optical discs DSC2 and DSC3 and the third optical disc DSC4 and provide a stop effect based on the formation of flare using the difference between numerical apertures to be required.

In this case, since m1· λ1, ≒ m2· λ2 ≠ m3· λ3, a diffraction effect different from other diffraction effects acts on the third beam. If the diffraction structure is made to have both the function of correcting spherical aberration due to the difference in protective layer thicknesses and the stop effect based on the formation of frare, the minimum diffraction pitch decreases, resulting in requiring high machining precision. However, since the polarization plane of the light beam emitted from the third semiconductor laser CHL is made different from that of each of the light beams emitted from the first and second semiconductor lasers AL and EL by 90°, if the polarization hologram element HOE is designed to exert its diffraction effect on only the third beam, a decrease in the minimum diffraction pitch of the diffraction structure of the objective lens can be prevented. When, therefore, the polarization plane of each of the light beams emitted from the first and second semiconductor lasers AL and EL is set in a predetermined direction, even passing through the polarization hologram element HOE is equivalent to passing through a homogeneous plane-parallel medium. For this reason, the divergence angle of the light remains the same, and the light is incident on the objective lens OBJ in this state. This makes it possible to properly record and/or reproduce information on/from the first and second optical discs DSC2 and DSC3 each having a 0.6 mm thick protective layer. Inversely, it becomes possible to exert the diffraction effect of the polarization hologram element HOE on the first and second beams and, on the other hand, not exert the diffraction effect on the third beam. In this case, it becomes possible to perform chromatic aberration correction in the first and second beams.

On the other hand, the light beam emitted from the third semiconductor laser CHL passes through the media of the polarization hologram element HOE which have the refractive indexes n and n', and hence the diffraction structure at the interface between the media produces a diffraction effect equivalent to that of a positive lens. This causes the light to be incident on the objective lens OBJ upon changing the divergence angle. Even when the same objective lens OBJ is used, therefore, information can be properly recorded and/or reproduced on/from the third optical disc DSC4 having a 1.2 mm thick protective layer while spherical aberration is corrected.

Assume that the numerical aperture NA set when the third optical disc DSC4 is used differs from those of other discs. In this case, if a diffraction structure is provided outside (effective diameter) a position corresponding to a small numerical aperture NA in the polarization hologram element HOE, when an optical disc with a small numerical aperture NA is used, only a light beam passing through the diffraction structure outside the effective diameter can be formed into flare. This makes it possible to provide a stop function for the polarization hologram element HOE.

In all the embodiments described above, the polarization hologram element HOE and objective lens OBJ are preferably driven integrally.

As the structure of the polarization hologram element HOE, the two-layer structure shown in Fig. 3 is exemplified in the present invention. A polarization hologram element having a single-layer structure is conceivable, in which the birefringence characteristics are enhanced by mixing fine particles (e.g., an acicula) in a resin film and devising the direction of the acicula with respect to the orientation of the resin.

**Claims**

1. An optical pickup apparatus, comprising:

a first laser source (AL) which emits a first beam;
a second laser source (EL) which emits a second beam having a polarization plane substantially perpendicular to a polarization plane of the first beam;
a polarization diffraction element (HOE) which selectively diffracts one of the first beam and the second beam in accordance with polarized states thereof; and
an objective lens (OBJ) which records or reproduces information by focusing the first beam which has passed through said polarization diffraction element onto an information recording surface of a first optical information recording medium (DSC1), and records or reproduces information by focusing the second beam which has passed through said polarization diffraction element onto an information recording surface of a second optical information recording medium (DSC2),

wherein a wavelength of the first beam and that of the second beam are different from each other,
**characterised in that** the objective lens (OBJ) includes a refraction lens, which has a positive refractive power, and a diffraction structure, which has a plurality of rings with fine stepped portions formed on at least one of optical surfaces of the refraction lens, and a diffraction order in the diffraction structure at which a highest diffraction efficiency is obtained with respect to a beam having a shorter wavelength is different from a diffraction order at which a highest diffraction efficiency is obtained with respect to a beam having a longer wavelength, and
wherein the polarization diffraction element (HOE) generates diffracted light which exhibits a highest diffraction efficiency at a predetermined diffraction order other than 0 when one of the first beam and the second beam is incident in a predetermined polarized state.

2.  The apparatus of claim 1, wherein the polarization diffraction element (HOE) generates diffracted light with a diffraction efficiency of not less than 85% with respect to one of two incident light beams having orthogonal polarization planes.

3.  The apparatus of claim 1, wherein letting λ1 be the wavelength of the first beam, m1 be a diffraction order at which a highest diffraction efficiency is obtained when the first beam passes through the diffraction structure, λ2 (λ2 > λ1) be the wavelength of the second beam, and m2 be the diffraction order at which a highest diffraction efficiency is obtained when the second beam passes through the diffraction structure (HOE), the following condition is satisfied, and the polarization diffraction element (HOE) selectively generates diffracted light when one of the first beam and the second beam passes therethrough

$$0.9 < |\, m1 \cdot \lambda1 \,| \,/\, |\, m2 \cdot \lambda2 \,| < 1.1 \qquad \ldots(1)$$

4.  The apparatus of claim 1, wherein
    the apparatus includes a third laser source (CHL) which emits a third beam having a wavelength λ3 such that a polarization plane becomes substantially perpendicular to a polarization plane of the first beam or the second beam, and
    letting λ1 (λ1 < λ3) be a wavelength of the first beam, m1 be a diffraction order at which a highest diffraction efficiency is obtained when the first beam passes through the diffraction structure (HOE), λ2 (λ1 < λ2 < λ3) be a wavelength of the second beam, m2 be a diffraction order at which a highest diffraction efficiency is obtained when the second beam passes through the diffraction structure (HOE), and m3 be a diffraction order at which a highest diffraction efficiency is obtained when the third beam passes through the diffraction structure (HOE), the following condition is satisfied, and the polarization diffraction element selectively generates diffracted light when one or two beams of the first beam, the second beam and the third beam pass therethrough

$$0.9 < |\, m1 \cdot \lambda1 \,| \,/\, |\, m2 \cdot \lambda2 \,| < 1.1 \qquad \ldots(2)$$

$$|\, m3 \cdot \lambda3 \,| \,/\, |\, m1 \cdot \lambda1 \,| < 0.9 \text{ or}$$
$$|\, m3 \cdot \lambda3 \,| \,/\, |\, m1 \cdot \lambda1 \,| < 1.1 \qquad \ldots(3)$$

5.  The apparatus of claim 4, wherein the polarization diffraction element (HOE) selectively diffracts the two beams having the aligned polarization planes, and diffraction efficiencies for the two wavelengths become maximised at different diffraction orders.

6.  The apparatus of claim 1, wherein the polarization diffraction element (HOE) is driven integrally with the objective lens (OBJ).

7.  The apparatus of claim 1, wherein the polarization diffraction element (HOE) is configured such that a birefringent medium (H3) and an isotropic medium (H2) are placed in contact with each other in an optical axis direction.

8.  The apparatus of claim 7, wherein the bi-refringent medium (H3) has a cross-section which is taken along a plane perpendicular to a traveling direction of incident light and is formed concentrically, and a cross-section which is taken along a plane in a radial direction including the traveling direction of the incident light and is formed in a sawtooth shape.

**Patentansprüche**

1. Optische Aufnahmevorrichtung, mit:

   einer ersten Laserquelle (AL), die einen ersten Strahl emittiert;
   einer zweiten Laserquelle (EL), die einen zweiten Strahl emittiert, der eine Polarisationsebene im Wesentlichen senkrecht zu einer Polarisationsebene des ersten Strahls aufweist;
   einem Polarisationsbeugungselement (HOE), das den ersten Strahl oder den zweiten Strahl selektiv in Übereinstimmung mit deren Polarisierungs-Zuständen beugt; und
   einer Objektivlinse (OBJ), die Information durch Fokussieren des ersten Strahls aufzeichnet oder wiedergibt, der durch das Polarisationsbeugungselement auf eine Informationsaufzeichnungsoberfläche eines ersten optischen Informationsaufzeichnungsmediums (DSC1) gelaufen ist, und Information durch Fokussieren des zweiten Strahls aufzeichnet oder wiedergibt, der durch das Polarisationsbeugungselement auf eine Informationsaufzeichnungsoberfläche eines zweiten optischen Informationsaufzeichnungsmediums (DSC2) gelaufen ist,

   wobei eine Wellenlänge des ersten Strahls und die des zweiten Strahls voneinander unterschiedlich sind, **dadurch gekennzeichnet, dass** die Objektivlinse (OBJ) eine Beugungslinse umfasst, die eine positive Leistung aufweist, und eine Beugungsstruktur, die eine Mehrzahl von Ringen mit feinen abgestuften Abschnitten aufweist, die auf mindestens einer der optischen Oberflächen der Beugungslinse ausgebildet sind, und eine Beugungsordnung in der Beugungsstruktur, bei der ein höchster Beugungswirkungsgrad mit Bezug auf einen Strahl mit einer kürzeren Wellenlänge erhalten wird, sich von einer Beugungsordnung unterscheidet, bei der ein höchster Beugungswirkungsgrad mit Bezug auf einen Strahl mit einer längeren Wellenlänge erhalten wird, und wobei das Polarisationsbeugungselement (HOE) gebeugtes Licht erzeugt, das einen höchsten Beugungswirkungsgrad bei einer vorbestimmten Beugungsordnung verschieden von 0 zeigt, wenn der erste Strahl oder der zweite Strahl in einem vorbestimmten Polarisierungs-Zustand einfällt.

2. Vorrichtung gemäß Anspruch 1, bei der das Polarisationsbeugungselement (HOE) gebeugtes Licht mit einem Beugungswirkungsgrad von nicht weniger als 85% mit Bezug auf einen der beiden einfallenden Lichtstrahlen mit orthogonalen Polarisationsebenen erzeugt.

3. Vorrichtung gemäß Anspruch 1, bei der, wenn $\lambda 1$ eine Wellenlänge des ersten Strahls, m1 eine Beugungsordnung, bei der ein höchster Beugungswirkungsgrad erhalten wird, wenn der erste Strahl durch die Beugungsstruktur läuft, $\lambda 2$ ($\lambda 2 > \lambda 1$) eine Wellenlänge des zweiten Strahls und m2 eine Beugungsordnung ist, bei der ein höchster Beugungswirkungsgrad erhalten wird, wenn der zweite Strahl durch die Beugungsstruktur (HOE) läuft, die folgende Bedingung erfüllt wird, und das Polarisationsbeugungselement (HOE) gebeugtes Licht selektiv erzeugt, wenn der erste Strahl oder der zweite Strahl hindurch läuft.

$$0,9 < |\, m1 \cdot \lambda 1\,| \,/\, |\, m2 \cdot \lambda 2\,| < 1,1 \qquad \ldots (1)$$

4. Vorrichtung gemäß Anspruch 1, bei der
   die Vorrichtung eine dritte Laserquelle (CHL) aufweist, die einen dritten Strahl mit einer Wellenlänge $\lambda 3$ emittiert, sodass eine Polarisationsebene im Wesentlichen senkrecht zu einer Polarisationsebene des ersten Strahls oder des zweiten Strahls wird, und,
   wenn $\lambda 1$ ($\lambda 1 < \lambda 3$) eine Wellenlänge des ersten Strahls, m1 eine Beugungsordnung, bei der ein höchster Beugungswirkungsgrad erhalten wird, wenn der erste Strahl durch die Beugungsstruktur (HOE) läuft, $\lambda 2$ ($\lambda 1 < \lambda 2 < \lambda 3$) eine Wellenlänge des zweiten Strahls, m2 eine Beugungsordnung, bei der ein höchster Beugungswirkungsgrad erhalten wird, wenn der zweite Strahl durch die Beugungsstruktur (HOE) läuft, und m3 eine Beugungsordnung ist, bei der ein höchster Beugungswirkungsgrad erhalten wird, wenn der dritte Strahl durch die Beugungsstruktur (HOE) läuft, die folgende Bedingung erfüllt wird und das Polarisationsbeugungselement selektiv gebeugtes Licht erzeugt, wenn ein oder zwei Strahlen des ersten Strahls, des zweiten Strahls und des dritten Strahls hindurch laufen.

$$0,9 < |\ m1 \cdot \lambda 1\ | \ / \ |\ m2 \cdot \lambda 2\ | < 1,1 \qquad \ldots (2)$$

$$|\ m3 \cdot \lambda 3\ | \ / \ |\ m1 \cdot \lambda 1\ | < 0,9 \ \text{oder}$$

$$|\ m3 \cdot \lambda 3\ | \ / \ |\ m1 \cdot \lambda 1\ | > 1,1 \qquad \ldots (3)$$

5. Vorrichtung gemäß Anspruch 4, bei der das Polarisationsbeugungselement (HOE) die beiden Strahlen mit den ausgerichteten Polarisationsebenen selektiv streut und Beugungswirkungsgrade für die beiden Wellenlängen bei unterschiedlichen Beugungsordnungen maximiert sind.

6. Vorrichtung gemäß Anspruch 1, bei der das Polarisationsbeugungselement (HOE) einstückig mit der Objektivlinse (OBJ) angetrieben wird.

7. Vorrichtung gemäß Anspruch 1, bei der das Polarisationsbeugungselement (HOE) konfiguriert ist, sodass ein doppelbrechendes Medium (H3) und ein isotropes Medium (H2) in Kontakt miteinander in einer optischen Achsenrichtung angeordnet sind.

8. Vorrichtung gemäß Anspruch 7, bei der das doppelbrechende Medium (H3) einen Querschnitt, der entlang einer Ebene senkrecht zu einer Laufrichtung von einfallendem Licht genommen wird und konzentrisch ausgebildet ist, und einen Querschnitt, der entlang einer Ebene in einer radialen Richtung, welche die Laufrichtung des einfallenden Lichts einschließt, genommen wird und in einer Sägezahnform ausgebildet ist, aufweist.

**Revendications**

1. Dispositif de lecture optique, comprenant :

une première source laser (AL) qui émet un premier faisceau ;
une deuxième source laser (EL) qui émet un deuxième faisceau ayant un plan de polarisation sensiblement perpendiculaire à un plan de polarisation du premier faisceau ;
un élément de diffraction à polarisation (HOE) qui diffracte sélectivement l'un du premier faisceau et du deuxième faisceau selon leurs états polarisés ; et
une lentille de focalisation (OBJ) qui enregistre ou reproduit des informations en focalisant le premier faisceau qui a traversé ledit élément de diffraction à polarisation sur une surface d'enregistrement d'informations d'un premier support d'enregistrement d'informations optique (DSC1) et enregistre ou reproduit des informations en focalisant le deuxième faisceau qui a traversé ledit élément de diffraction à polarisation sur une surface d'enregistrement d'informations d'un deuxième support d'enregistrement d'informations optique (DSC2),

dans lequel une longueur d'onde du premier faisceau et celle du deuxième faisceau sont différentes l'une de l'autre, **caractérisé en ce que** la lentille de focalisation (OBJ) comprend une lentille de réfraction qui a une puissance de réfraction positive et une structure de diffraction qui a une pluralité d'anneaux présentant des portions fines en escalier formées sur au moins une des surfaces optiques de la lentille de réfraction et un ordre de diffraction dans la structure de diffraction au niveau duquel une efficacité de diffraction la plus élevée est obtenue vis-à-vis d'un faisceau ayant une longueur d'onde plus courte est différent d'un ordre de diffraction au niveau duquel une efficacité de diffraction la plus élevée est obtenue vis-à-vis d'un faisceau ayant une longueur d'onde plus longue, et dans lequel l'élément de diffraction à polarisation (HOE) génère une lumière diffractée qui présente une efficacité de diffraction la plus élevée à un ordre de diffraction prédéterminé différent de 0 lorsque l'un du premier faisceau et du deuxième faisceau est incident dans un état polarisé prédéterminé.

2. Dispositif selon la revendication 1, dans lequel l'élément de diffraction à polarisation (HOE) génère une lumière diffractée avec une efficacité de diffraction non inférieure à 85 % vis-à-vis de l'un de deux faisceaux lumineux incidents ayant des plans de polarisation orthogonaux.

3. Dispositif selon la revendication 1, dans lequel, $\lambda 1$ étant la longueur d'onde du premier faisceau, m1 étant un ordre de diffraction auquel une efficacité de diffraction la plus élevée est obtenue lorsque le premier faisceau traverse la structure de diffraction, λ2 (λ2 > λ1) étant la longueur d'onde du deuxième faisceau et m2 étant l'ordre de diffraction auquel une efficacité de diffraction la plus élevée est obtenue lorsque le deuxième faisceau traverse la structure de diffraction (HOE), la condition suivante est satisfaite et l'élément de diffraction à polarisation (HOE) génère sélectivement une lumière diffractée lorsque l'un du premier faisceau et du deuxième faisceau le traverse

$$0,9 < \left| m1 \cdot \lambda1 \right| / \left| m2 \cdot \lambda2 \right| < 1,1 \qquad \ldots(1)$$

4. Dispositif selon la revendication 1, dans lequel
le dispositif comprend une troisième source laser (CHL) qui émet un troisième faisceau ayant une longueur d'onde λ3 de sorte qu'un plan de polarisation devient sensiblement perpendiculaire à un plan de polarisation du premier faisceau ou du deuxième faisceau, et
λ1 (λ1 < λ3) étant une longueur d'onde du premier faisceau, m1 étant un ordre de diffraction auquel une efficacité de diffraction la plus élevée est obtenue lorsque le premier faisceau traverse la structure de diffraction (HOE), λ2 (λ1 < λ2 < λ3) étant une longueur d'onde du deuxième faisceau, m2 étant un ordre de diffraction auquel une efficacité de diffraction la plus élevée est obtenue lorsque le deuxième faisceau traverse la structure de diffraction (HOE) et m3 étant un ordre de diffraction auquel une efficacité de diffraction la plus élevée est obtenue lorsque le troisième faisceau traverse la structure de diffraction (HOE), la condition suivante est satisfaite et l'élément de diffraction à polarisation génère sélectivement une lumière diffractée lorsqu'un ou deux faisceaux parmi le premier faisceau, le deuxième faisceau et le troisième faisceau le traverse

$$0,9 < \left| m1 \cdot \lambda1 \right| / \left| m2 \cdot \lambda2 \right| < 1,1 \qquad \ldots(2)$$

$$\left| m3 \cdot \lambda3 \right| / \left| m1 \cdot \lambda1 \right| < 0,9 \quad \text{ou}$$

$$\left| m3 \cdot \lambda3 \right| / \left| m1 \cdot \lambda1 \right| < 1,1 \qquad \ldots(3)$$

5. Dispositif selon la revendication 4, dans lequel l'élément de diffraction à polarisation (HOE) diffracte sélectivement les deux faisceaux dont les plans de polarisation sont alignés, et les efficacités de diffraction pour les deux longueurs d'onde sont maximisées à des ordres de diffraction différents.

6. Dispositif selon la revendication 1, dans lequel l'élément de diffraction à polarisation (HOE) est commandé de manière solidaire avec la lentille de focalisation (OBJ).

7. Dispositif selon la revendication 1, dans lequel l'élément de diffraction à polarisation (HOE) est configuré de telle sorte qu'un milieu biréfringent (H3) et un milieu isotrope (H2) sont mis en contact l'un avec l'autre dans une direction d'axe optique.

8. Dispositif selon la revendication 7, dans lequel le milieu biréfringent (H3) présente une coupe transversale prise le long d'un plan perpendiculaire à une direction de déplacement d'une lumière incidente et est formé de manière concentrique, ainsi qu'une coupe transversale prise le long d'un plan dans une direction radiale comprenant la direction de déplacement de la lumière incidente et est formé en dent de scie.

# FIG. 1

# FIG. 2

# FIG. 3

# FIG. 4

# FIG. 5

# FIG. 6

# FIG. 7

# FIG. 8

# FIG. 9

**EP 1 616 327 B1**

## REFERENCES CITED IN THE DESCRIPTION

### Patent documents cited in the description

- JP 2003091859 A
- EP 1296317 A